# EUROPEAN PATENT APPLICATION

(11) **EP 4 506 668 A1**
(43) Date of publication of application: **12.02.2025**
(21) Application number: 23837542.2
(22) Date of filing: 21.06.2023
(51) Int. Cl.: G01J 1/04, B23K 26/21

(54) **METHOD FOR MEASURING POWER OF WELDING LASER, AND LASER WELDING SYSTEM**

(71) Applicant: Contemporary Amperex Technology (Hong Kong) Limited, Central, Central And Western District (HK)
(72) Inventor: JING, Zhiyong, Fujian 352100 (CN); ZHAO, Jun, Fujian 352100 (CN); DUAN, Minmin, Fujian 352100 (CN)
(74) Representative: Rowlands, Stuart Michael
(86) International application number: PCT/CN2023/101704
(87) International publication number: WO 2024/259630

(57) **Abstract**

Embodiments of the present application provide a method for detecting a power of a welding laser light and a laser welding system. The method for detecting a power of a welding laser light includes obtaining at least one power sample, wherein the power sample is obtained by sampling, every preset time period, the power of the welding laser light emitted by a laser. The method may further include acquiring a plurality of power samples within a preset power range in the at least one power sample. The method may further include processing the plurality of power samples within the preset power range to obtain power detection results.

## Description

### Technical Field

The present application relates to the field of laser welding, and in particular, to a method for detecting a power of a welding laser light and a laser welding system.

### Background

With the progress of high-power laser research and the application expansion of laser welding, laser welding is widely used in various industries such as the automobile industry, electronics industry, and the biomedical industry. As the range of applications of laser welding becomes increasingly wider, the requirements for the quality of laser welding are also increasing. One of the important parameters that determines the quality of the laser welding is the power of the laser light emitted by a laser in a laser welding process.

In order to detect the quality of the laser welding, it is necessary to more accurately detect the power of the welding laser light.

### Summary of the Invention

In view of the above problems, the present application provides a method for detecting a power of a welding laser light and a laser welding system, which is capable of detecting the power of the welding laser light more accurately.

According to one aspect of the present application, a method for detecting a power of a welding laser light is provided, including obtaining at least one power sample, wherein the power sample is obtained by sampling, every preset time period, a power of the welding laser light emitted by a laser. The method may further include acquiring a plurality of power samples within a preset power range in the at least one power sample. The method may further include processing the plurality of power samples within the preset power range to obtain power detection results.

In the technical solution of the embodiment of the present application, by only obtaining the power samples within the preset power range in a laser power detection process, the interference of power samples outside the preset power range can be eliminated, thereby obtaining more accurate power detection results.

In some embodiments, processing the plurality of power samples within the preset power range may include: averaging the plurality of power samples to obtain an average power, wherein the power detection results include the average power. By calculating the average power of the power samples, for example, a numerical value of the power may be used to reflect an average level of the output power of the laser and indicate the quality of the laser light emitted by the laser.

In some embodiments, processing the plurality of power samples within the preset power range may include: determining at least one of a minimum power and a maximum power of the plurality of power samples, wherein the power detection results include the at least one of the minimum power and the maximum power. By determining the minimum power and the maximum power of the power samples, for example, an extreme value, distribution, and fluctuation of the power samples within the preset power range can be determined, and the minimum power and the maximum power can continue to be used in other processes as described below.

In some embodiments, processing the plurality of power samples within the preset power range may include: averaging the powers in the plurality of power samples other than the at least one of the minimum power and the maximum power to obtain a corrected average power, wherein the power detection results include the corrected average power. The average power is corrected by removing at least one of the minimum power and the maximum power, for example, power samples with large fluctuations within the preset power range may be excluded, thereby obtaining more accurate average power data.

In some embodiments, the method further includes obtaining, based on a position welded by the welding laser light, a working condition of the welding performed by the laser; and determining the preset power range according to the working condition of the welding. By obtaining the working condition of the welding performed by the laser according to the position of the welding of the welding laser light and determining the preset power range according to the working condition of the welding, for example, the preset power range can be flexibly determined according to the situation of the position to be welded by the laser, so that the preset power range conforms to the actual situation.

In some embodiments, the method further includes: determining a power collection standard value according to the working condition of the welding; and determining a lower limit value and an upper limit value of the preset power range respectively for the power collection standard value. By first determining the power collection standard value and then respectively determining the lower limit value and the upper limit value of the preset power range for the power collection standard value, for example, the process of determining the power collection standard value and the preset power range can be simplified, and the setting flexibility can be increased.

In some embodiments, the method further includes: judging whether the quantity of the plurality of power samples within the preset power range meets a data volume requirement; and sending the power detection results in response to the quantity of the plurality of power samples meeting the data volume requirement. By sending the power detection results in response to the quantity of the plurality of power samples meeting the data volume requirement, the quantity of the power detection results to be sent can be reduced, thereby avoiding sending worthless power detection results, and the like.

In some embodiments, the method further includes: judging whether the quantity of the plurality of power samples within the preset power range reaches a data volume upper limit; and stopping, in response to the quantity of the plurality of power samples reaching a data volume upper limit, sampling the power of the laser light emitted by the laser for welding. By setting the data volume upper limit for the quantity of power samples within the preset power range, increasing the processing burden and processing cost may be avoided.

In some embodiments, the method further includes obtaining, according to the position of the welding of the welding laser light, the working condition of the welding performed by the laser; and determining the data volume upper limit according to the working condition of the welding. Thus, the data volume upper limit of the laser light samples can be flexibly set according to the working condition of the laser.

In some embodiments, the method further includes determining the data volume upper limit according to a duration of one laser light emission by the laser and the preset time period. Therefore, the data volume upper limit capable of covering the entire duration of the laser light emission by the laser may be determined.

In some embodiments, the method further includes determining the data volume upper limit according to a duration of one laser light emission by the laser, a ramp-down time of an output power of the laser, and the preset time period. Therefore, the data volume upper limit capable of excluding the ramp-down time of the output power of the laser may be determined.

In some embodiments, the method further includes determining the data volume upper limit according to the duration of the power of the laser light within the preset power range and the preset time period. Therefore, the data volume upper limit capable of excluding a ramp-up time and the ramp-down time of the output power of the laser may be determined.

In some embodiments, the method further includes generating, in response to the power sample obtained by sampling the power of the laser light being greater than a power threshold, information indicating that the power of the laser light exceeds the power threshold, wherein the power threshold is greater than or equal to an upper limit value of the preset power range. In this way, the power of the welding laser light being excessively high may be found out, and the abnormality of laser welding may be found out and recorded.

In some embodiments, the method further includes obtaining, in response to the power samples obtained by sampling the power of the laser light within a threshold time period being all less than a lower limit value of the preset power range, repair welding information instructing the laser to perform repair welding, wherein the threshold time period is determined according to the ramp-up time of the output power of the laser. In this way, the power of the welding laser light being too low may be found out, and information of performing the repair welding may be generated.

In some embodiments, the method further includes: obtaining at least one power sample, wherein the power sample is obtained by sampling, every preset time period, the power of the laser light emitted by the laser based on the repair welding information; acquiring a plurality of repair welding power samples within the preset power range in the at least one repair welding power sample; and processing the plurality of repair welding power samples within the preset power range to obtain repair welding power detection results. Thus, the power of the welding laser light can be detected in the repair welding process, and so as to implement monitoring of the laser light power of the repair welding.

In some embodiments, the method may further include: obtaining, in response to the power samples obtained by sampling the power of the laser light within a threshold time period being all less than a lower limit value of the preset power range, information indicating a failure of the welding performed by the laser, wherein the threshold time period is determined according to a ramp-up time of the output power of the laser. In this way, the situation of welding failure can be found out, an item having the welding failure may be removed from the production line in time, and the further processing of the item may be stopped.

According to another aspect of the present application, a laser welding system is provided, and the system includes a laser, a galvanometer, a controller, and an upper computer. The laser may be configured to emit a laser light for welding and include a communication interface. The galvanometer may be configured to receive the laser light from the laser and manipulate the laser light for welding. The controller may include a communication interface and be configured to be coupled to the communication interface of the laser by the communication interface via a communication line, so as to receive, from the laser, a power of the laser light emitted by the laser for welding. The upper computer may be configured to be communicatively coupled to the controller and receive the power detection results from the controller. The controller may be configured to perform some or all of the steps in the above method.

In the technical solution of the embodiment of the present application, the controller receives, from the laser through the communication interface and the communication line, information about the power of the laser light emitted by the laser, and can use the communication interface provided by the laser to easily obtain the power of the laser light emitted by the laser, and therefore, for example, the convenience of system construction and configuration can be increased, and the cost of the entire system can be controlled.

According to another aspect of the present application, a laser welding system is provided. The system includes a laser, a galvanometer, a galvanometer control unit, a power analog quantity acquisition unit, a controller, and an upper computer. The laser may be configured to emit a laser light for welding. The galvanometer may be configured to receive the laser light from the laser. The galvanometer control unit may be configured to control the galvanometer to manipulate the laser light for welding. The power analog quantity acquisition unit may be configured to acquire an analog quantity representing the power of the laser light emitted by the laser for welding. The controller may be configured to receive, from the power analog quantity acquisition unit through a wire, the analog quantity representing the power of the laser light emitted by the laser for welding, and obtain, according to the analog quantity, the power of the laser light emitted by the laser for welding. The upper computer may be configured to be communicatively coupled to the controller and receive the power detection results from the controller. The controller may be configured to perform some or all of the steps in the above method.

In the technical solution of the embodiment of the present application, by receiving the analog quantity representing the power of the laser light from the power analog quantity acquisition unit through the wire by the controller, and obtaining the power of the laser light according to the analog quantity, the time for performing analog-to-digital conversion and encoding on the power of the laser light and sending the encoded data out through the communication interface via the communication line can be saved, so as to improve the processing speed of the system. In addition, the controller directly acquires the analog quantity representing the power of the laser light through the wire and the analog quantity is not processed by another third party; therefore, the reliability and accuracy of the obtained data can be improved.

According to another aspect of the present application, a non-transitory computer-readable storage medium is provided. The non-transitory computer-readable storage medium stores instructions, and when the instructions are executed by a processor, some or all of the steps in the above method are performed.

According to another aspect of the present application, a computer program product is provided, the computer program product includes instructions, and when the instructions are executed by a processor, some or all of the steps in the above method are performed.

The above illustrations are merely brief descriptions of the technical solutions of the present application. Specific implementation manners of the present application are described specifically in the following embodiments to understand the technical solutions of the present application more clearly and implement the present application according to the content of the specification, and to make the above and other objectives, features and advantages of the present application more comprehensible.

### Brief Description of Drawings

Various other advantages and benefits will become clear for those having ordinary skill in the art by reading the detailed descriptions of the following preferred implementation manners. The accompanying drawings are merely used for showing the preferred embodiments and are not construed as limiting the present application. In all the drawings, identical components are represented by identical reference numerals. The drawings are not drawn to actual scale. In the drawings:
Fig. 1 shows an example graph of a laser light power in a process of a laser light emission by a laser;
Fig. 2 shows a structural schematic diagram of a laser welding system 100 according to some embodiments of the present application;
Fig. 3 shows a structural schematic diagram of a laser welding system 200 according to some other embodiments of the present application;
Fig. 4 shows a flow chart of a method for detecting a power of a welding laser light according to some embodiments of the present application;
Fig. 5 shows an example graph of a laser light power in combination with a method for detecting a power of a welding laser light according to an embodiment of the present application;
Fig. 6 shows a flow chart of a method for detecting a power of a welding laser light according to some other embodiments of the present application;
Fig. 7 shows a flow chart of a method for detecting a power of a welding laser light according to some other embodiments of the present application;
Fig. 8 shows a flow chart of a method for detecting a power of a welding laser light according to some other embodiments of the present application;
Fig. 9 shows a flow chart of a method for detecting a power of a welding laser light according to some other embodiments of the present application; and
Fig. 10 shows a general hardware environment 1000 in which the method of the present application can be applied according to an embodiment of the present application.

Reference numerals in the Detailed Description are as follows:
Laser welding system 100;
Laser 110; Output optical path 111; Optical splitter 112; Photoelectric converter 113; Communication interface 114; Communication line 115;
Galvanometer 120; Laser output optical fiber 121; Communication cable 122;
Controller 130; Communication interface 131;
Upper computer 140; Communication line 141;
Laser welding system 200;
Laser 210; Output optical path 211; Optical splitter 212; Photoelectric converter 213;
Galvanometer 220; Laser output fiber 221;
Controller 230; Communication interface 231; Input terminal 232;
Galvanometer control unit 250; Communication cable 251; Communication cable 252;
Power analog quantity acquisition unit 260; Wire 261; Output terminal 262;
Upper computer 240; Communication line 241.

### Detailed Description

Implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

Embodiments of the technical solutions of the present application will be described in detail below with reference to the drawings. The following embodiments are only used to more clearly illustrate the technical solutions of the present application, and therefore are only used as examples and cannot be used to limit the protection scope of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

Reference herein to "an embodiment" means that a particular feature, structure, or characteristic described in connection with the embodiment can be included in at least one embodiment of the present application. The appearance of the phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to more than two (including two).

In the description of the embodiments of the present application, unless otherwise expressly specified and limited, technical terms "mount," "join," "connect," "fix," "couple," and the like should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those having ordinary skill in the art, the specific meanings of the above terms in the embodiments of the present application can be understood according to specific situations.

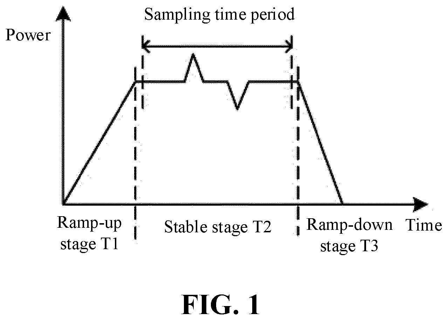

Referring to Fig. 1, Fig. 1 shows an example graph of a laser light power in a process of a laser light emission by a laser. As shown in Fig. 1, an abscissa axis of a coordinate axis represents the time of laser emission, and a vertical axis of the coordinate axis represents the power of the laser light. As can be seen from the power curve in the figure that at the beginning of each laser emission, the power of the laser light may first go through a ramp-up stage T1, that is, in the stage, it rises from zero power to a power for stable emission. Afterwards, the power of the laser light enters a stable stage T2, and in the stage, the power of the laser light may be basically stable. Before the end of the laser emission, the power of the laser light may go through a ramp-down stage T3, that is, in the stage, it drops from the power for stable emission to zero power. The power during the stable stage T2 of the laser emission reflects an effective power of the laser light for welding and is therefore an expected result.

In order to measure the power of the laser light emitted during the stable stage T2, the power of the laser light may be sampled during the sampling time period as shown in Fig. 1. Specifically, in the process of measuring the power of the laser light, the sampling time period of the power of the laser light may be set to avoid the ramp-up stage T1 and the ramp-down stage T3 of the power of the laser light, so as to only sample the power of the laser light in the stable stage T2. For example, the ideal sampling time period of the power of the laser light may be set to start after the ramp-up stage T1 of the power of the laser light and end before the ramp-down stage T3 of the power of the laser light.

However, time lengths of the ramp-up stage T1, the stable stage T2, and the ramp-down stage T3 of the power of the laser light may be difficult to determine and may also be affected by various factors, and therefore, it is difficult to accurately set the sampling time period of the power of the laser light, and it is difficult to obtain a more accurate power of the laser light. In addition, as shown in Fig. 1, the power of the laser light may fluctuate drastically even in the stable stage T2, and therefore, the power samples obtained in the sampling time period of the power of the laser light may still include abrupt power samples that deviate from the stable emission power. Analyzing such power samples may result in wrong laser power detection results.

In order to obtain more accurate laser power detection results, one or more embodiments of the present application provide a method for detecting a power of welding laser light. The method applies a preset power range to power samples for laser welding and in a process of laser power detection, obtains only power samples within the preset power range. By processing the power sample within the preset power range, more accurate power detection results may be obtained.

Through the technical solutions of the embodiments of the present application, by only obtaining the power samples within the preset power range (for example, a range including the stable emission power of the laser) in the laser power detection process, the interference of power samples outside the preset power range may be excluded (for example, the power samples in the ramp-up stage and the ramp-down stage of the power of the laser light and the abrupt power samples deviating from the stable emission power), so that more accurate power detection results may be obtained.

The method for detecting the power of the welding laser light disclosed in the embodiments of the present application may be applied to laser welding systems in various industries. For example, the methods of the embodiments of the present application may be applied to laser welding systems in industries such as vehicle parts, new energy batteries, stainless steel products, and electronic products, and achieve the effect of obtaining more accurate power detection results.

Likewise, the method for detecting the power of the welding laser light disclosed in the embodiments of the present application may be applied to laser welding systems of various types.

For the convenience of description, the following embodiments are illustrated by taking laser welding systems 100 and 200 in the embodiments of the present application as examples.

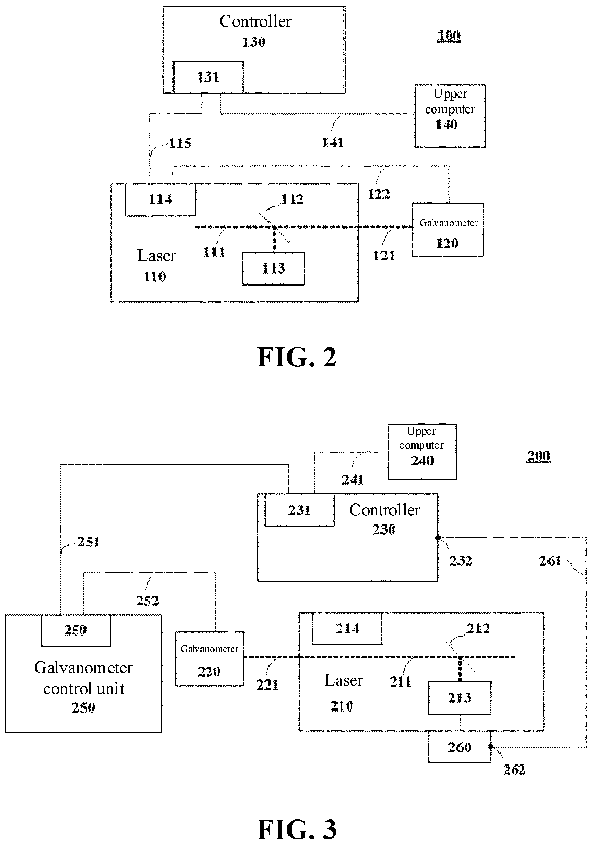

Referring to Fig. 2, Fig. 2 shows a structural schematic diagram of the laser welding system 100 according to some embodiments of the present application. As shown in the drawing, the laser welding system 100 may include a laser 110, a galvanometer 120, a controller 130, and an upper computer 140.

In an embodiment of the present application, the laser 110 is configured to emit a laser light for welding. The laser 110 in the embodiment of the present application may be various types of lasers, such as a carbon dioxide laser, a fiber laser, a YAG laser, and a semiconductor laser. The power of the laser light output by the laser 110 may range from hundreds of watts to several kilowatts.

In some embodiments of the present application, in order to obtain the power of the laser light output by the laser 110, for example, an optical splitter 112 may be arranged in an output optical path 111 of the laser 110. The optical splitter 112 can guide a small part of the laser light to a photoelectric converter 113, and the photoelectric converter 113 converts the intensity (that is, power) of the laser light into the amplitude of an electrical signal, thereby obtaining the power of the laser in the laser welding process. In the embodiment of the present application, the optical splitter 112 may be, for example, a half-mirror, and reflects or transmits a small part of the laser light (for example, 0.2% to 0.5%) to the photoelectric converter 113 and emits the rest of the laser light out by transmission or reflection. The power of the laser light emitted by the laser 110 may be obtained by amplifying the power of the laser light obtained by the photoelectric converter 113 according to a proportion of the part of the laser light reflected by the optical splitter 112 in the total power of the laser light. In the embodiment of the present application, the photoelectric converter 113 includes, for example, a photomultiplier tube, a photodiode, a photocell, a CCD, a CMOS, and the like.

In the embodiment of the present application, the laser 110 further includes a communication interface 114. Through the communication interface 114, the laser 110 may be coupled to the controller 130 via a communication line 115. The communication interface 114 of the laser 110 may be, for example, an Ethernet interface or an industrial Ethernet interface, and the communication line 115 may be an Ethernet line or an industrial Ethernet line. Through the communication interface 114, the laser 110 may receive a control command from the controller 130 and send information to the controller 130. In the embodiment of the present application, the laser 110 may send information about the power of the laser light emitted by the laser 110 to the controller 130 through the communication interface 114.

In the embodiment of the present application, the communication interface and the communication line may include various adapters and circuit systems implemented in software and/or hardware, so as to be capable of communicating between two subjects using a wired or wireless protocol. The wired protocol is, for example, any one or more of a serial port protocol, a parallel port protocol, an Ethernet protocol, a USB protocol, or other wired communication protocols. The wireless protocol is, for example, any one of an IEEE 802.11 Wi-Fi protocol, a cellular network communication protocol, and the like.

In the embodiment of the present application, the galvanometer 120 is configured to receive the laser light from the laser 110 and manipulate the laser light for welding. The galvanometer 120 may receive the laser light from the laser 110 through, for example, a laser output fiber 121. The galvanometer 120 may perform optical processing such as focusing on the laser light from the laser 110, and emit the laser light to a desired welding position through reflection or refraction, so as to perform welding on the welding position. A reflective mirror surface of the galvanometer 120 rotates or translates in a one-dimensional direction or a two-dimensional direction under electrostatic/piezoelectric/electromagnetic drive, so as to adjust a reflection position of the laser light. The galvanometer 120 may further be connected to the communication interface 114 of the laser 110 through a communication cable 122, so as to receive a control signal for, for example, controlling the welding position from the laser 110.

In the embodiment of the present application, the controller 130 may, for example, control the laser 110 and receive information from the laser 110. The controller 130 may be, for example, a PLC, an industrial PC, a microcontroller, a field programmable gate array (FPGA), an application specific integrated circuit (ASIC), a programmable chip, and the like. The controller 130 includes a communication interface 131, and is configured to be coupled to the laser 110 through the communication interface 131 via the communication line 115. The communication interface 131 may be, for example, an Ethernet interface or an industrial Ethernet interface. Through the communication interface 131, the controller 130 can send the control command to the laser 110 and receive the information from the laser 110. In the embodiment of the present application, the controller 130 may receive, from the laser 110, information about the power of the laser light emitted by the laser 110.

In the embodiment of the present application, for the power of the laser light emitted by the laser 110, the controller 130 may obtain at least one power sample, and the power sample is obtained by sampling the power of the laser light every preset time period. The controller 130 may acquire a plurality of power samples within a preset power range among the at least one power sample. The controller 130 may process the acquired plurality of power samples within the preset power range to obtain power detection results. In this way, only power samples within the expected power range may be obtained and power samples outside the expected power range may be excluded, thereby realizing the effect of obtaining more accurate power detection results. Operations performed by the controller 130 are further explained below with reference to various embodiments of the present application.

In the embodiment of the present application, the upper computer 140 is configured to be communicatively coupled to the controller 130. For example, the upper computer 140 may be connected to the communication interface 131 of the controller 130 through the communication line 141, and send information to the controller 130 or receive information from the controller 130. In the embodiment of the present application, the upper computer 140 may receive the power detection results from the controller 130. The upper computer 140 may also be communicatively coupled to other computing devices (such as calculators, servers, and single-chip microcomputers) and/or storage devices, and send information to and receive information from these devices. The upper computer 140 refers to a device that sends commands to the controller 130 for control and receives information from the controller 130. The upper computer 140 may be, for example, an industrial personal computer, a workstation, a touch screen, and the like.

In the above embodiment of the present application, the controller 130 receives, from the laser 110 through the communication interface and the communication line, information about the power of the laser light emitted by the laser 110, and can use the communication interface provided by the laser 110 to easily obtain the power of the laser light emitted by the laser 110, and therefore, for example, the convenience of system construction and configuration can be increased, and the cost of the entire system can be controlled.

In the above embodiments of the present application, although the optical splitter 112 and the photoelectric converter 113 are shown as being located inside the laser 110, those skilled in the art may understand that in other embodiments of the present application, one or more of the optical splitter 112 and the photoelectric converter 113 may be located outside the laser 110 or other locations and may be independent components, as long as the optical splitter 112 is capable of guiding the laser light to the photoelectric converter 113, so that the photoelectric converter 113 can obtain the power of the laser light and sends it out through the communication interface 114.

Next, referring to Fig. 3, Fig. 3 shows a structural schematic diagram of the laser welding system 200 according to some other embodiments of the present application. As shown in the figure, the laser welding system 200 may include a laser 210, a galvanometer 220, a controller 230, an upper computer 240, a galvanometer control unit 250, and a power analog quantity acquisition unit 260.

Similar to the embodiment shown in Fig. 2, in the embodiment of the present application, the laser 210 is configured to emit a laser light for welding, and may be a laser of various types. Also similarly, an optical splitter 212 and a photoelectric converter 213 for converting the intensity of the laser light into an electrical signal may be arranged in an output optical path 211 of the laser 210. The description of these components will not be repeated here.

Similar to the embodiment shown in Fig. 2, in the embodiment of the present application, the galvanometer 220 is configured to receive the laser light from the laser 210 through, for example, a laser output fiber 221 and manipulate the laser light for welding. Different from the embodiment shown in Fig. 2, the laser welding system 200 shown in Fig. 3 further includes a galvanometer control unit 250. The galvanometer control unit 250 may be communicatively coupled to the controller 230 through a communication cable 251 to receive a control signal from the control unit 230. In addition, the galvanometer control unit 250 is configured to control the galvanometer 220 to manipulate the laser light for welding. For example, the galvanometer control unit 250 may be communicatively coupled to the galvanometer 220 through a communication cable 252, and control, according to the control signal received from the control unit 230, the galvanometer 220 to manipulate the laser light for welding.

Different from the embodiment shown in Fig. 2, the laser welding system 200 shown in Fig. 3 further includes a power analog quantity acquisition unit 260. The power analog quantity acquisition unit 260 is configured to acquire an analog quantity representing the power of the laser light emitted by the laser 210 for welding. The power analog quantity acquisition unit 260 may, for example, be coupled to the photoelectric converter 213 and receive an electrical signal representing the power of the laser light from the photoelectric converter 213. According to the electrical signal, the power analog quantity acquisition unit 260 may generate an analog quantity representing the power of the laser light emitted by the laser 210 for welding. The power analog quantity acquisition unit 260 may send the analog quantity representing the power of the laser light emitted by the laser for welding to the controller 230 via a wire 261. For example, an output terminal 262 of the power analog quantity acquisition unit 260 may be connected to an input terminal 232 of the controller 230 via the wire 261.

In the embodiment of the present application, the controller 230 includes a communication interface 231 and is configured to be coupled to the galvanometer control unit 250 through the communication interface 231 via the communication line 251. Through the communication interface 231, the controller 230 can send various control commands to the galvanometer control unit 250.

In the embodiment of the present application, as mentioned above, the controller 230 includes an input connection terminal 232, and may receive, from the power analog quantity acquisition unit 260 through the input connection terminal 232 via the wire 261, the analog quantity that represents the power of the laser light emitted by the laser 210 for welding. The controller 230 may obtain, according to the analog quantity, the power of the laser light emitted by the laser 210 for welding.

Similar to the embodiment shown in Fig. 2, in the embodiment of the present application, the controller 230 may perform similar operations on the power of the laser light emitted by the laser 210 to obtain power detection results. In this way, only power samples within the expected power range may be obtained and power samples outside the expected power range may be excluded, thereby realizing the effect of obtaining more accurate power detection results. Operations performed by the controller 230 may further be explained below with reference to various embodiments of the present application.

Similar to the embodiment shown in Fig. 2, in the embodiment of the present application, the upper computer 240 is configured to be communicatively coupled to the controller 230. The upper computer 240 may also be communicatively coupled to other computing devices and/or storage devices, and send information to and receive information from these devices.

In the above embodiments of the present application, by receiving the analog quantity representing the power of the laser light from the power analog quantity acquisition unit 260 through the wire 261 by the controller 230, and obtaining the power of the laser light according to the analog quantity, compared with the laser welding system 100 shown in Fig. 2, the time for performing analog-to-digital conversion and encoding on the power of the laser light and sending the encoded data out through the communication interface via the communication line can be saved, so as to improve the processing speed of the system. In addition, the controller 230 directly acquires the analog quantity representing the power of the laser light through the wire 261 and the analog quantity is not processed by another third party; therefore, the reliability and accuracy of the obtained data can be improved.

In the above embodiments of the present application, although the galvanometer control unit 250 is shown and the galvanometer 220 receives the control signal from the galvanometer control unit 250, those skilled in the art may understand that in other embodiments of the present application, the galvanometer 220 may receive a control signal from the controller 230 similarly as the laser welding system 100 shown in Fig. 2 without providing the galvanometer control unit 250.

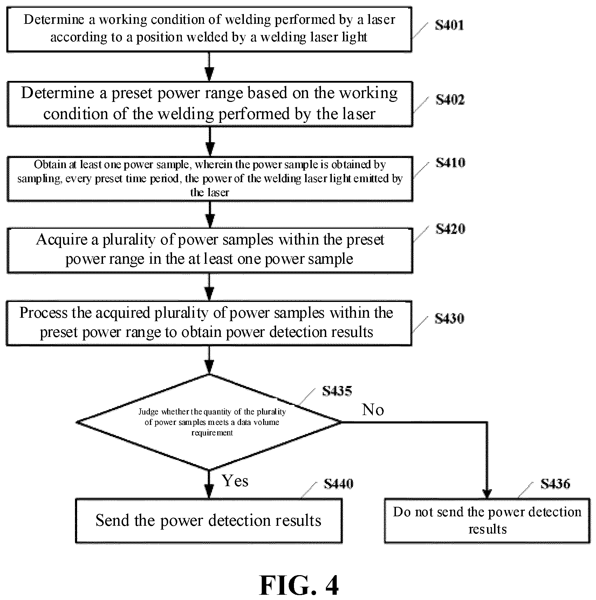

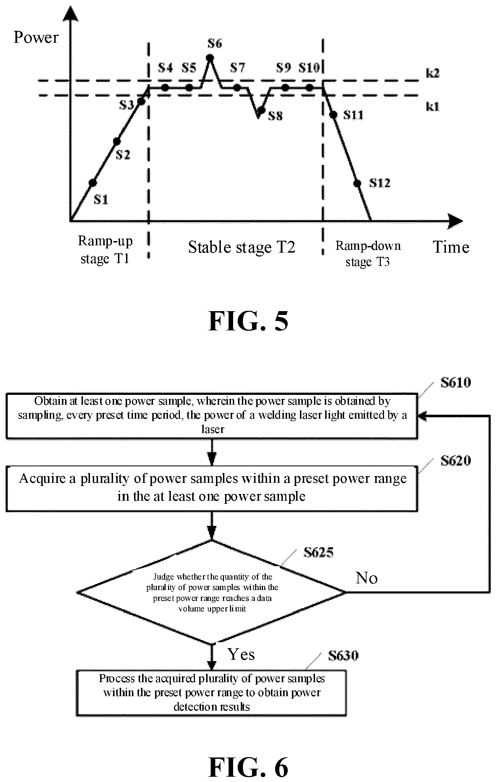

According to some embodiments of the present application, referring to Fig. 4 and further referring to Fig. 5, Fig. 4 shows a flow chart of a method for detecting a power of a welding laser light according to some embodiments of the present application, and Fig. 5 shows an example graph of a laser light power in combination with a method for detecting a power of a welding laser light according to an embodiment of the present application.

As shown in Fig. 4, in step S410, at least one power sample is obtained, wherein the power sample is obtained by sampling the power of the welding laser light emitted by a laser within a preset time period. Referring to Fig. 5, as in Fig. 1, an abscissa axis of a coordinate axis in Fig. 5 represents the time of laser emission, and a vertical axis of the coordinate axis represents the power of the laser light. As shown in Fig. 5, the laser starts emission when the time is zero, and since the laser starts the emission, the power of the laser light may be sampled every preset time period T4 to obtain at least one power sample. Reference numerals S1 to S12 in Fig. 5 represent obtained power samples, and a time interval between every two power samples is T4. As can be seen from Fig. 5, the power samples S1 to S3 are in a ramp-up stage T1 of the power of the laser light, the power samples S3 to S10 are in a stable stage T2 of the power of the laser light, and the power samples S11 to S12 are in a ramp-down stage T3 of the power of the laser light.

Referring to Fig. 2, in some embodiments of the present application, the controller 130 may receive real-time communication data of the power of the laser light from the laser 110, and extract those power samples at intervals of the preset time period in the communication data of the power of the laser light, so as to obtain at least one power sample by sampling. In some other embodiments of the present application, the controller 130 may order the laser 110 to sample and send communication data of the current power of the laser light every preset time period, and use the received power of the laser light as at least one power sample.

Referring to Fig. 3, in some embodiments of the present application, the controller 230 may receive real-time analog quantities of the power of the laser light from the power analog quantity acquisition unit 260, and extract the analog quantities at intervals of the preset time period among the analog quantities of the power of the laser light, and obtain at least one power sample by sampling according to the extracted analog quantities. In some other embodiments of the present application, the controller 230 may order the power analog quantity acquisition unit 260 to sample the power of the laser light every preset time period and provide an analog quantity of the current power of the laser light through the wire 261, and obtain at least one power sample according to the analog quantity provided.

As shown in Fig. 4, in step S420, a plurality of power samples within a preset power range in the at least one power sample are acquired. Returning to Fig. 5, in the embodiment of the present application, the preset power range may be set as a value from a power k1 to a power k2, wherein the power k1 is a lower limit value of the preset power range, and the power k2 is an upper limit value of the preset power range. As can be seen from Fig. 5, the powers of the power samples S1 to S3 in the ramp-up stage T1 of the power of the laser light and the power samples S11 and S12 in the ramp-down stage T3 of the power of the laser light are all less than the power k1, and therefore are outside the preset power range k1 to k2. In addition, although the power samples S4 to S10 are in the stable stage T2 of the power of the laser light, due to power fluctuations of the laser, the power of the power sample S6 is greater than the upper limit value k2 of the preset power range, and the power of the power sample S8 is less than the lower limit value k1 of the preset power range. Therefore, the powers of the power samples S6 and S8 are also not within the preset power range k1 to k2. Through step S420, a plurality of power samples S4, S5, S7, S9, and S10 within the preset power range may be obtained.

In the embodiment of the present application, it may be judged by the controllers 130 and 230 whether each power sample acquired by sampling is within the preset power range, and the power samples judged as "yes" are acquired as the plurality of power samples within the preset power range.

As shown in Fig. 4, in step S430, the acquired plurality of power samples within the preset power range are processed to obtain power detection results. In the embodiment of the present application, the acquired plurality of power samples may be processed by the controllers 130 and 230 to obtain the power detection results. In the embodiments of the present application, various processing may be performed on the power samples, and an example of the processing performed on the power samples will be further described below.

By only obtaining the power samples within the preset power range (reflecting the stable emission power of the laser) in the laser power detection process, only the power samples S4, S5, S7, S9, and S10 may be obtained, and the power samples S1, S2, S3, S6, S8, S11, and S12 outside the preset power range (away from the stable emission power of the laser) are excluded. By processing the power samples thus obtained, more accurate power detection results may be obtained.

Those skilled in the art may understand that the power curve of the laser light and the quantity of the power samples shown in Fig. 5 are schematic. In other words, the power curve of the laser light may be determined according to the actual situation, and the quantity of the power samples may be several to hundreds according to the actual time length of the laser emission and the set length of the preset time period. In some embodiments of the present application, the time length of the laser emission may be 1 second to several seconds, and the length of the preset time period may be several microseconds to hundreds of microseconds. In this case, the quantity of the power samples obtained by sampling may be tens to hundreds, and the quantity of the power samples within the preset power range may also be tens to hundreds.

Next, the processing performed on the plurality of power samples acquired in step S430 will be described.

According to some embodiments of the present application, performing processing on the plurality of power samples within the preset power range may include averaging the plurality of power samples to obtain an average power. In this case, the power detection results include the average power.

The average power refers to a numerical value obtained by summing power values of the plurality of power samples and dividing the result of summation by the quantity of the power samples. In the embodiment of the present application, the controller 130 or 230 may sum the power value of each power sample among the plurality of power samples in an accumulative manner, at the same time count the quantity of the power samples to obtain the quantity of the power samples, and divide the result of the summation by the quantity of the power samples to obtain the average power.

By calculating the average power of the power samples, for example, a numerical value of the power may be used to reflect an average level of the output power of the laser and indicate the quality of the laser light emitted by the laser.

According to some embodiments of the present application, performing processing on the plurality of power samples within the preset power range may include determining at least one of a minimum power and a maximum power of the plurality of power samples. In this case, the power detection results may include at least one of the minimum power and the maximum power.

The minimum power and the maximum power of the power samples refer to a minimum value and a maximum value of the powers of the plurality of acquired power samples. In the embodiment of the present application, one power sample of the plurality of power samples may be compared with another power sample by the controller 130 or 230, and the smaller power sample of the two is retained. Afterwards, the controller 130 or 230 compares the smaller power sample with another power sample that has not yet been compared, and retains the smaller power sample of the two. The processing is repeated for all power samples within the preset power range, and the controller 130 or 230 may determine the minimum power of the plurality of power samples acquired. Similarly, the controller 130 or 230 may ultimately determine the maximum power by comparing the power samples to each other and retaining the larger power sample.

In another embodiment of the present application, the controller 130 or 230 may arrange the powers of the plurality of power samples in an order from small to large or from large to small, and determine at least one of the minimum power and the maximum power according to the power samples arranged in order.

As desired, only the minimum power of the power samples, only the maximum power of the power samples, or both the minimum power and the maximum power of the power samples may be determined. In addition, since the plurality of acquired power samples are all within the preset power range, the determined minimum power and maximum power of the power samples are also within the preset power range.

By determining the minimum power and the maximum power of the power samples, for example, an extreme value, distribution, and fluctuation of the power samples within the preset power range can be determined, and the minimum power and the maximum power can continue to be used in other processes as described below.

According to some embodiments of the present application, in the case that the plurality of power samples other than at least one of the minimum power and the maximum power have been determined, performing processing on the plurality of power samples within the preset power range may include averaging powers of the plurality of power samples other than at least one of the minimum power and the maximum power, so as to obtain a corrected average power. In this case, the power detection results include the corrected average power.

In the embodiment of the present application, the controller 130 or 230 may sum the power value of each power sample among the plurality of power samples in an accumulative manner, and at the same time count the quantity of the power samples to obtain the quantity of the power samples. In addition, at least one of the minimum power and the maximum power of the power samples may be determined by the controller 130 or 230. Afterwards, at least one of the minimum power and the maximum power is subtracted from the result of the summation by the controller 130 or 230, and the obtained value is divided by a value obtained by subtracting one (in the case of subtracting one of the minimum power and the maximum power) or subtracting two (in the case of subtracting both the minimum power and the maximum power) from the quantity of the power samples, so that the corrected average power is obtained.

The average power is corrected by removing at least one of the minimum power and the maximum power, for example, power samples (that is, the minimum power and/or maximum power) with large fluctuations within the preset power range may be excluded, thereby obtaining more accurate average power data.

In the embodiment of the present application, as shown in Fig. 4, the method for detecting the power of the welding laser light according to some embodiments of the present application further includes step S401. In this step, a working condition of welding performed by the laser is determined according to a position welded by the welding laser light. In addition, the method may also include step S402, and in the step, the preset power range is determined based on the working condition of the welding.

In the embodiment of the present application, the position welded by the welding laser light may refer to a position where a welding seam is located, that is, a position where two welded parts intersect. For example, for laser welding of power batteries, the welding positions may include: tab welding, bus welding, shell welding, explosion-proof valve welding, and the like. Different welding positions may place different requirements on the welding laser light. For example, the tab welding requires that a welding depth is capable of penetrating a tab and welding the tab to an electrode below. The shell welding requires that the laser light is capable of forming a continuous and firm welding seam to connect two parts of the shell, and the welding laser light cannot penetrate the shell to avoid damaging a battery body. For side seam welding and top seam welding of the shell, the side seam welding requires a longer welding seam length, a longer welding time, and a wider welding seam width, while the top seam welding may require a greater welding depth. The explosion-proof valve welding requires an accurate and stable welding power of the laser light. The working conditions of welding performed by the laser refer to a working situation to be implemented by the laser when the laser is used for welding. In the embodiment of the present application, the working condition of the laser may include at least one of the following: a power requirement of the welding laser light, a duration of the laser light emitted by the laser, a repetition frequency of the laser light, the number of repetitions of the laser light, the power stability of the welding laser light, and the like. As mentioned above, for different positions welded by the welding laser light, the working conditions of the welding performed by the laser may also be different. Therefore, in the embodiment of the present application, the working condition of the laser may be determined according to the position welded by the welding laser light. Specifically, the working condition of the laser may be determined according to the working capability of the laser itself and the welding requirements obtained from the information of the welding position, such as welding material, welding temperature, weld depth, and weld length. For example, for a welding seam with a high melting point of welding material, a high welding temperature, or a large welding seam depth, for example, for the welding of a top seam of a casing of a battery, the power requirement of the welding laser light may be relatively high. In this working condition, the preset power range may be determined according to the power requirement of the welding laser light, so that the preset power range meets the power requirement of the welding laser light. In addition, for a welding seam with a long welding length, for example, for the welding of a side seam of the casing of the battery, the duration of the laser light emitted by the laser may be longer. Due to the limitations of the working capacity of the laser, in order to achieve the duration, it may be necessary to control the emission power of the laser accordingly. In this working condition, the preset power range may be determined according to the duration of the laser light emitted by the laser, so that the laser is capable of performing continuous emission at the power within the preset power range for the corresponding time. In addition, for the working condition with a high repetition frequency and a large number of repetitions of the laser light, for example, for the welding of the tab of the battery, it may also be necessary to control the emission power of the laser accordingly. In this working condition, the preset power range may be determined according to the repetition frequency and the number of repetitions of the laser light emitted by the laser, so that the laser is capable of performing continuous emission at the power within the preset power range at the corresponding frequency and number of times.

In the embodiment of the present application, the width of the preset power range may also be determined according to the working condition of the welding performed by the laser. For example, in the working condition that does not require high power stability of the welding laser light, for example, for the welding of the casing of the battery, the width of the preset power range may be set wider. For example, in the case where the duration of the laser light emitted by the laser is long, for example, for the welding of the explosion-proof valve of the battery, the width of the preset power range may also be set wider considering the fluctuation and attenuation of the emission power of the laser.

In addition, in some embodiments of the present application, the preset power range may be determined in combination with a plurality of parameters in the working condition of the laser. For example, the preset power range may be determined in combination with the power requirement of the welding laser light and the duration of the laser light emitted by the laser, so that the laser is capable of perform continuous emission at the power within the preset power range meeting the power requirement for a corresponding time.

In the embodiment of the present application, the controllers 130 and 230 may determine the working condition of the welding performed by the laser according to the position welded by the welding laser light, and determine the preset power range according to the determined working condition. In another embodiment of the present application, the controllers 130 and 230 may determine the preset power range through the above operations according to a user input reflecting the position welded by the welding laser light and/or directly reflecting the working condition of the laser.

By determining the working condition of the welding performed by the laser according to the position welded by the welding laser light and further determining the preset power range, for example, the preset power range can be flexibly determined according to the working situation to be implemented by the laser, so that the preset power range conforms to the actual situation.

In the embodiment of the present application, determining the preset power range based on the working condition of the welding performed by the laser in step S402 may include determining a power collection standard value based on the working condition of the welding performed by the laser. Afterwards, in step S402, a lower limit value and an upper limit value of the preset power range may be respectively determined for the power collection standard value.

The power collection standard value refers to a numerical value used for determining a standard of the preset power range. For example, the upper limit value of the preset power range may be determined by increasing the power collection standard value by a certain numerical value, and the lower limit value of the preset power range may be determined by lowering the power collection standard value by a certain numerical value. Similar to the content discussed above, the power collection standard value may also be determined based on the working condition of the welding performed by the laser, which will not be described in detail here. In the embodiment of the present application, the power collection standard value may be approximately equal to the power requirement of the welding laser light. The numerical values increased and lowered respectively from the power collection standard value may be different from each other, and may be determined according to actual needs. In addition, as discussed above, the magnitude of the numerical values increased and lowered may also be determined according to the working condition of the laser, which will not be described in detail here.

By first determining the power collection standard value and then respectively determining the lower limit value and the upper limit value of the preset power range for the power collection standard value, for example, the process of determining the power collection standard value and the preset power range can be simplified, and the setting flexibility can be increased.

Those skilled in the art can understand that steps S401 and S402 are optional steps. In other words, the method according to the embodiment of the present application may not include the steps S401 and S402, and in this case, a default preset power range or a preset power range input by the user may be used directly.

In some embodiments of the present application, the steps S410, S420, and S430 may be performed sequentially. That is, the controllers 130 and 230 first collect a plurality of power samples in the step S410. After the collection of the plurality of power samples is completed, the controllers 130 and 230 acquire a plurality of power samples within a preset power range among the power samples in the step S420. Afterwards, the controllers 130 and 230 process the plurality of acquired power samples together in the step S430.

In some other embodiments of the present application, the steps S410, S420, and S430 may be performed alternately and repeatedly. That is, the controllers 130 and 230 obtain a power sample by sampling in the step S410, and then try to acquire a power sample within a preset power range in the step S420. At this time, if the power sample collected in the step S410 is not within the preset range, no power sample can be obtained in the step S420. Afterwards, in the step S430, the controllers 130 and 230 process the one sample acquired in the step S420, and obtain an intermediate power detection result. Afterwards, the controllers 130 and 230 return to the step S410, continue to sample the power of the laser light, and perform the operations of the steps S420 and S430 on the one power sample. Repeating as such, after the operations of the steps S420 and S430 for the last power sample are completed, the controllers 130 and 230 obtain the power detection results.

Those skilled in the art may understand that, in combination with the descriptions of the above two embodiments, some of the steps S410, S420, and S430 may also be performed sequentially, and some of the steps may be performed alternately and repeatedly, and no further description will be made here.

In some embodiments of the present application, the method for detecting the power of the welding laser light may further include step S440, and in the step, the power detection results are sent.

In the embodiment of the present application, the power detection results may be sent from the controllers 130 and 140 to upper computers 140 and 240. The upper computers 140 and 240 may store the power detection results, display the power detection results to the user, analyze the power detection results, or send the power detection results to another device. For example, the power detection results may be sent to a manufacturing execution system (MES). The stored power detection results may be used for tracing the specific situation of this welding subsequently. For example, when looking for a cause of a welding problem, studying to improve the welding process, or the like, the situation of the power of the laser light of this welding may be obtained from the stored power detection results. By analyzing a power detection result, it is possible to check whether there is a problem with the quality of this welding. By analyzing a plurality of power detection results, differences between a plurality of times of welding may be compared.

In other embodiments of the present application, the power detection results may also be sent from the controllers 130 and 140 to another computer, server, and the like.

The sent power detection results may be used for analysis, thereby improving the utilization value of the power detection results.

In some embodiments of the present application, step S435 may also be included before the step S440, and in the step, it is judged whether the quantity of power samples meets a data volume requirement.

The power detection results are generated by processing a plurality of power samples, and when the quantity of the power samples used for generating the power detection results is small, it may indicate that the power detection results are less accurate, non-representative, or the corresponding welding duration is too short and does not need to be recorded, or the like. Therefore, a basic data volume requirement may be set for the quantity of power samples, and only the power detection result meeting the data volume requirement is sent. The data volume requirement may be set according to actual needs. For example, the data volume requirement may be set to 10. In this case, only the power detection result obtained by processing more than 10 power samples is sent out. The data volume requirement may also be set to 50, 100, or the like.

Afterwards, when it is judged that the quantity of power samples corresponding to the power detection result meets the data volume requirement, the method proceeds to step S440, and the power detection result is sent at the step.

In addition, when it is judged that the quantity of power samples corresponding to the power detection result does not meet the data volume requirement, the method proceeds to step S436, and the power detection result is not sent at the step.

By sending the power detection results in response to the quantity of the plurality of power samples meeting the data volume requirement, the quantity of the power detection results to be sent can be reduced, thereby avoiding sending worthless power detection results, and the like.

Next, referring to Fig. 6, Fig. 6 shows a flow chart of a method for detecting a power of a welding laser light according to some other embodiments of the present application. Steps S610, S620, and S630 in Fig. 6 correspond to the steps S410, S420, and S430 in Fig. 4, respectively, and thus will not be described in detail.

In the embodiment of the present application, as shown in Fig. 6, at least one power sample is obtained in the step S610, wherein the power sample is obtained by sampling a power of a laser light every preset time period, and in the step S620, power samples within a preset power range are acquired. Afterwards, step S625 may also be included, and in the step, it is judged whether the quantity of power samples within the preset power range reaches a data volume upper limit. By performing the step S610 and the step S620, the quantity of acquired power samples within the preset power range increases as the laser emission time increases. In the case of a long laser emission time, the quantity of acquired power samples within the preset power range may be excessively large and exceed the number required for efficient recording and analysis of the power of the laser light. The excessive quantity of power samples may unnecessarily increase the processing burden of the controllers 130 and 230, thereby increasing the processing cost. Therefore, the data volume upper limit may be set for the quantity of power samples within the preset power range, and the power samples exceeding the data volume upper limit are not collected or processed any more. The data volume upper limit may be set according to actual needs. For example, the data volume upper limit may be set to 300. In this case, when the quantity of acquired power samples within the preset power range reaches 300, no more power samples within the preset power range are acquired to avoid excessive increase of the quantity of power samples processed by the controllers 130 and 230.

Afterwards, when it is judged that the quantity of power samples within the preset power range does not reach the data volume upper limit, the method returns to the step S610, and continues to sample the power of the laser light in the step.

In addition, when it is judged that the quantity of power samples corresponding to the power detection result reaches the data volume upper limit, the method proceeds to the step S630 and stops sampling the power of the laser light emitted by the laser for welding.

By setting the data volume upper limit for the quantity of power samples within the preset power range, increasing the processing burden and processing cost may be avoided.

In the embodiment of the present application, the working condition of the welding performed by the laser may be determined according to the position welded by the welding laser light, and the data volume upper limit may be determined according to the working condition of the welding performed by the laser. For example, for a welding position that requires low power stability, for example, a higher data volume upper limit may be set under the corresponding working condition, thereby obtaining more data for analysis. In addition, for a welding position with a long welding length, for example, a higher data volume upper limit may be set under the corresponding working condition, so as to obtain more comprehensive power information of the welding laser light for the welding seam. For a welding position that requires a high transmission power, for example, a lower data volume upper limit may be set under the corresponding working condition, so as to avoid, for example, damage to a photoelectric converter after working for a long time.

Thus, the data volume upper limit of the laser light samples can be flexibly set according to the working condition of the laser.

In the embodiment of the present application, the data volume upper limit may be determined according to a duration of one laser light emission by the laser and a preset time period. For example, the duration of one laser light emission by the laser may be divided by the preset time period, and the data volume upper limit is determined according to the obtained quotient. The quotient obtained by dividing the duration of one laser light emission by the laser by the preset time period indicates the maximum quantity of power samples that is capable of being obtained during the entire time period of the laser light emission. Therefore, the obtained data volume upper limit of power samples can cover the entire duration of laser light emission by the laser, thus avoiding data loss.

Therefore, the data volume upper limit capable of covering the entire duration of the laser light emission by the laser may be determined.

In the embodiment of the present application, the data volume upper limit may be determined according to a duration of one laser light emission by the laser, a ramp-down time of an output power of the laser, and the preset time period. As described with reference to Fig. 1 and Fig. 5, before the end of the laser emission, the power of the laser light may go through a ramp-down stage T3, that is, in the stage, it drops from the power for stable emission to zero power. The power samples in the ramp-down stage T3 of the power of the laser light may not be within the preset power range and thus will not be processed in the step S630 even though they are sampled in the step S610. In the embodiment of the present application, for example, the data volume upper limit may be determined according to a quotient obtained by dividing a difference between the duration of one laser light emission by the laser and the ramp-down time of the output power of the laser by the preset time period. The difference obtained by subtracting the ramp-down time of the output power of the laser from the duration of one laser emission by the laser is the time length after the ramp-down stage of the power of the laser light is removed. The quotient obtained by dividing the difference thus obtained by the preset time period represents the maximum quantity of power samples capable of being obtained in the time period of laser emission after the ramp-down stage T3 is removed. The data volume upper limit of the power samples thus obtained can exclude the ramp-down stage T3 of the power of the laser light, thereby reducing the obtained data volume, and reducing the processing burden and cost.

Therefore, the data volume upper limit capable of excluding the ramp-down time of the output power of the laser may be determined.

In the embodiment of the present application, the data volume upper limit may be determined according to the duration of the power of the laser light within the preset power range and the preset time period. As described with reference to Fig. 1 and Fig. 5, at the beginning of each laser emission, the power of the laser light may first go through a ramp-up stage T1, that is, in the stage, it rises from zero power to a power for stable emission. Similar to the ramp-down stage T3 of the power of the laser light, the power samples in the ramp-up stage T1 of the power of the laser light may not be within the preset power range and thus will not be processed in the step S630 even though they are sampled in the step S610. In the embodiments of the present application, the data volume upper limit may be determined according to the quotient obtained by dividing the duration of the power of the laser light within the preset power range by the preset time period. A difference obtained by subtracting the ramp-up time and the ramp-down time of the output power of the laser from the duration of one laser emission by the laser is the time length after the ramp-up time and the ramp-down stage of the power of the laser light are removed. In the embodiment of the present application, the difference thus obtained may represent the duration of the power of the laser light within the preset power range. The quotient obtained by dividing the difference thus obtained by the preset time period represents the maximum quantity of power samples capable of being obtained from the power of the laser light within the preset power range. Therefore, the data volume upper limit of the power samples thus obtained can exclude the ramp-up stage T1 and the ramp-down stage T3 of the power of the laser light, thereby further reducing the obtained data volume, and further reducing the processing burden and cost.

Therefore, the data volume upper limit capable of excluding the ramp-up time and the ramp-down time of the output power of the laser may be determined.

Those skilled in the art may understand that, in the embodiment of the present application, no data volume upper limit may be set for the quantity of a plurality of power samples within the preset power range. For example, in some embodiments of the present application, it may be determined whether to stop sampling the power of the laser light emitted by the laser according to whether one emission of the laser light ends. Therefore, the power of the laser light may be sampled during the entire time period of one laser emission, thereby avoiding sample omission to the greatest extent. For example, in one embodiment of the present application, when a laser emission signal received from the laser stops or when a laser emission end signal is received from the laser, it is considered that a laser emission has stopped and thus sampling performed on the power of the laser light emitted by the laser is stopped. For example, in another embodiment of the present application, after the result of sampling the power of the laser light is close to zero for a certain time period, it is considered that a laser emission has stopped and thus sampling performed on the power of the laser light emitted by the laser is stopped. The time period may be, for example, less than an interval between two laser emissions and greater than the preset time period for laser light sampling.

Thereby, continuing sampling the power of the laser light after the laser emission has stopped may be avoided.

In addition, those skilled in the art may understand that, in the embodiment of the present application, the data volume upper limit may be set for the quantity of a plurality of power samples within the preset power range, and at the same time, it is further determined whether one emission of the laser light ends. Thus, when one of the two situations of the quantity of the plurality of power samples reaching the data volume upper limit and determining that one emission of laser light ends is met, it is determined to stop sampling the power of the laser light emitted by the laser.

Thus, when to stop sampling the power of the laser light may be set more flexibly.

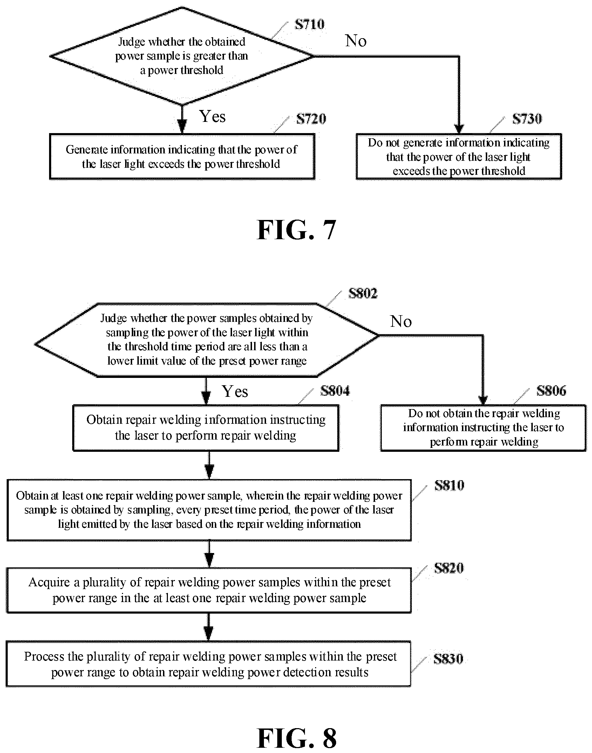

Next, referring to Fig. 7, Fig. 7 shows a flow chart of a method for detecting a power of a welding laser light according to some other embodiments of the present application.

In the steps S410 and S610 described above with reference to Fig. 4 and Fig. 6, at least one power sample is obtained, wherein the power sample is obtained by sampling the power of the laser light every preset time period. For the obtained power sample, the method of the present application may further include step S710, and at the step, it is judged whether the obtained power sample is greater than a power threshold. The power threshold may be greater than or equal to an upper limit value of the preset power range. When the power sample of the laser light is greater than the power threshold, it may be considered that the power of the laser light is too high and may cause a welding problem. For example, the welding depth being too high or the laser light breaking through a weldment may occur. Afterwards, at step S720, in a case that the obtained power sample is greater than the power threshold, information indicating that the power of the laser light exceeds the power threshold is generated. Otherwise, at step S730, in a case that the obtained power sample is not greater than the power threshold, information indicating that the power of the laser light exceeds the power threshold is not generated.

The generated information indicating that the power of the laser light exceeds the power threshold may be provided to the user to notify that the power of the laser light is too high, thereby reminding the user to check the quality of welding and take corresponding measures. In addition, the generated information indicating that the power of the laser light exceeds the power threshold may also be stored for later inspection and trace.

In this way, the power of the welding laser light being excessively high may be found out, and the abnormality of laser welding may be found out and recorded.

The steps shown in Fig. 7 may be performed after the steps S410 and S610 described in Fig. 4 and Fig. 6, and may be performed before the steps S420 and S620 described in Fig. 4 and

Fig. 6 or performed in parallel with the steps S420 and S620. When the steps shown in Fig. 7 are performed before the steps S420 and S620 described in Fig. 4 and Fig. 6, the processing in the steps S420 and S620 may not be performed on the laser samples exceeding the power threshold, thereby reducing the processing burden and cost.

Next, referring to Fig. 8, Fig. 8 shows a flow chart of a method for detecting a power of a welding laser light according to some other embodiments of the present application.

In the steps S410 and S610 described above with reference to Fig. 4 and Fig. 6, at least one power sample is obtained, wherein the power sample is obtained by sampling the power of the laser light every preset time period. For the obtained power samples, the method of the present application may further include step S802, at the step, it is judged whether the power samples obtained by sampling the power of the laser light within the threshold time period are all less than a lower limit value of the preset power range. The threshold time period may be determined according to a ramp-up time of the output power of the laser. In the embodiment of the present application, the threshold time period may be equal to or greater than the ramp-up time of the output power of the laser. When the power of the laser never reaches the lower limit value of the preset power range within a time period greater than the ramp-up stage T1 of the output power, it may be considered that the power of the laser cannot ramp up to reach the preset power range. For example, the laser may be malfunctioning or the working capable of the laser itself may not be capable of achieving output within the preset power range. In the case that an emission power of the laser is lower than the lower limit value of the preset power, such a laser cannot meet the welding requirement and thus cannot complete the current welding. For example, the welding material incapable of being melted, the welding depth being too low, or the like may occur.

Afterwards, at step S804, when the power samples obtained by sampling the power of the laser light within the threshold time period are all less than the lower limit value of the preset power range, repair welding information instructing the laser to perform repair welding may be obtained. Otherwise, at step S806, when at least one of the power samples obtained by sampling the power of the laser light within the threshold time period is greater than the lower limit value of the preset power range, no repair welding information instructing the laser to perform repair welding is obtained.

The repair welding information instructing the laser to perform repair welding may include, for example, a mark requiring repair welding, information about previous welding, repair welding energy required for repair welding, and the like. The information about the previous welding may include information such as welding power and welding duration of the previous welding just performed. The energy required to perform the repair welding may be determined according to the information about the previous welding. For example, the power of repair welding may be determined according to the power of the laser light of the previous welding, welding duration, and the like.

In this way, the power of the welding laser light being too low may be found out, and information of performing the repair welding may be generated.

After the step S804, during the repair welding, steps S810, S820, and S830 may be performed. The steps S810, S820, and S830 are similar to the steps S410, S420, and S430 previously described with reference to Fig. 4. That is, at the step S810, at least one power sample is obtained, wherein the power sample is obtained by sampling, every preset time period, the power of the laser light emitted by the laser based on the repair welding information. At the step S820, a plurality of repair welding power samples within the preset power range in the at least one repair welding power sample are acquired. At the step S830, the plurality of repair welding power samples within the preset power range are processed to obtain repair welding power detection results. The content described with reference to the above embodiments in the present application may be combined into the embodiment shown in Fig. 8, and will not be repeated here.

Thus, the power of the welding laser light can be detected in the repair welding process, and so as to implement monitoring of the laser light power of the repair welding.

Similar to the steps shown in Fig. 7, the steps S802, S804, and S806 shown in Fig. 8 may be performed after the steps S410 and S610 described in Fig. 4 and Fig. 6, and may be performed before the steps S420 and S620 described in Fig. 4 and Fig. 6 or performed in parallel with the steps S420 and S620. When the steps S802, S804 and S806 shown in Fig. 8 are performed before the steps S420 and S620 described in Fig. 4 and Fig. 6, in some embodiments of the present application, sampling performed on the power of the laser light may be stopped, that is, performing of the steps S420 and S620 is stopped, thereby reducing the processing burden and cost. Or, in some other embodiments of the present application, the sampling of the power of the laser light may not be stopped, and the sampled data may be recorded as information about the previous welding.

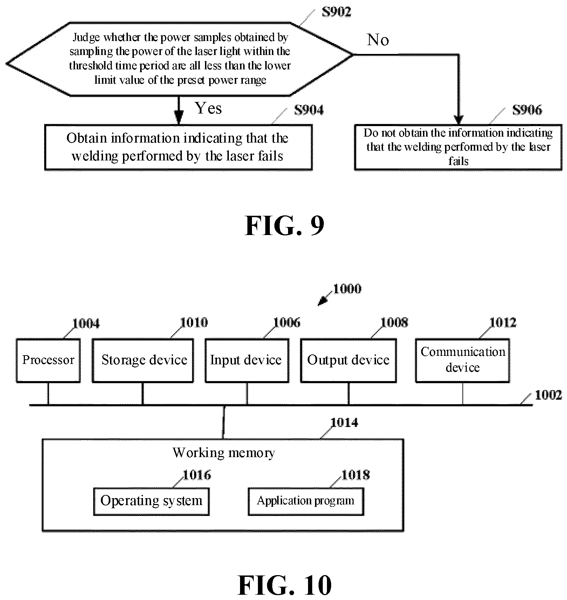

Next, referring to Fig. 9, Fig. 9 shows a flow chart of a method for detecting a power of a welding laser light according to some other embodiments of the present application.

Similar to the method of Fig. 8, the method in Fig. 9 further includes step S902, and in the step S902, for the obtained power samples, it is judged whether the power samples obtained by sampling the power of the laser light within the threshold time period are all less than the lower limit value of the preset power range.

Afterwards, at step S904, when the power samples obtained by sampling the power of the laser light within the threshold time period are all less than the lower limit value of the preset power range, information indicating that the welding performed by the laser fails may be obtained. Otherwise, at step S906, when at least one of the power samples obtained by sampling the power of the laser light within the threshold time period is greater than the lower limit value of the preset power range, information indicating that the welding performed by the laser fails may not be obtained.

The information indicating that the welding performed by the laser fails may include, for example, indicating that this welding fails, that the quality of the welding seam is unqualified, that the welded item should be scrapped, and instructing the user to check whether the laser is normal, and the like.

In this way, the situation of welding failure can be found out, an item having the welding failure may be removed from the production line in time, and the further processing of the item may be stopped.

Similar to the steps shown in Fig. 8, the steps S902, S904, and S906 shown in Fig. 9 may also be performed after the steps S410 and S610 described in Fig. 4 and Fig. 6, and may be performed before the steps S420 and S620 described in Fig. 4 and Fig. 6 or performed in parallel with the steps S420 and S620.

Fig. 10 shows a general hardware environment 1000 in which the present disclosure can be applied according to an example embodiment of the present disclosure.

Referring to Fig. 10, a computing device 1000 as an example of a hardware device applicable to aspects of the present disclosure will now be described. The computing device 1000 may be any machine configured to perform processing and/or computation, and may be, but is not limited to, a workstation, a server, a desktop computer, a laptop computer, a television, a tablet computer, a personal digital assistant, a smart phone, a portable camera, or any combination thereof. The above methods of the present application may be implemented in whole or at least in part by the computing device 1000 or a similar device or system.

The computing device 1000 may include elements capable of connecting to a bus 1002 or communicating with the bus 1002 via one or a plurality of interfaces. For example, the computing device 1000 may include the bus 1002, one or a plurality of processors 1004, one or a plurality of input devices 1006, and one or a plurality of output devices 1008. The one or a plurality of processors 1004 may be any type of processor, and may include, but not limited to, one or a plurality of general-purpose processors and/or one or a plurality of special-purpose processors (such as application-specific processing chips). The input device 1006 may be any type of device capable of entering information into a computing device, and may include, but is not limited to, a mouse, a keyboard, a touch screen, a microphone, and/or a remote control. According to some embodiments of the present disclosure, the input device 1006 may further include a camera. The output device 1008 may be any type of device capable of presenting information, and may include, but is not limited to, a display, a speaker, a video/audio output terminal, and/or a printer. The computing device 1000 may further include a non-transitory storage device 1010 or be connected to the non-transitory storage device 1010, and the non-transitory storage device 1010 may be any storage device that is non-transitory and may implement a data repository, and may include, but is not limited to a disk drive, an optical storage device, a solid state storage device, a floppy disk, a flexible disk, a hard disk, a magnetic tape or any other magnetic medium, a compact disk or any other optical medium, a read only memory (ROM), a random access memory (RAM), a high speed cache memory and/or any other memory chip or cartridge, and/or any other medium from which a computer can read data, instructions, and/or code. The non-transitory storage device 1010 may be removable from the interface. The non-transitory storage device 1010 may have data/instructions/code for implementing the above methods and the steps. The computing device 1000 may further include a communication device 1012. The communication device 1012 may be any type of device or system capable of communicating with an external device and/or with a network, and may include, but is not limited to, a modem, a network card, an infrared communication device, a wireless communication device, and/or a chipset for a device such as a Bluetooth TM device, a 802.11 device, a WiFi device, a WiMax device, and a cellular communications infrastructure.

The bus 1002 may include, but is not limited to, an Industry Standard Architecture (ISA) bus, a Micro Channel Architecture (MCA) bus, an Enhanced ISA (EISA) bus, a Video Electronics Standards Association (VESA) local bus, and a Peripheral Component Interconnect (PCI) bus.

The computing device 1000 may also include a working memory 1014, and the working memory 1014 may be any type of working memory that can store instructions and/or data useful for the operation of the processor 1004, and may include, but is not limited to, a random access memory and/or a read-only memory device.

Software elements may be located in the working memory 1014, and include, but are not limited to, an operating system 1016, one or a plurality of application programs 1018, drivers, and/or other data and code. Instructions for performing the methods and the steps described above may be included in one or a plurality of application programs 1018. The executable code or source code of the instructions of the software elements may be stored in a non-transitory computer-readable storage medium (such as the above (one or a plurality of) storage device(s) 1010), and may be read into the working memory 1014 when it is compilable and/or installable. The executable code or source code for the instructions of software elements may also be downloaded from a remote location.

From the above embodiments, those skilled in the art may clearly understand that the present disclosure may be implemented by software and necessary hardware, or the present disclosure may be implemented by hardware, firmware, and the like. Based on such understanding, the embodiments of the present disclosure may be partially implemented in the form of software. The computer software may be stored in a computer-readable storage medium, such as a floppy disk, a hard disk, an optical disc, or a flash memory. The computer software includes a series of instructions that cause a computer (such as a personal computer, a service station, or a network terminal) to perform the method or a part thereof according to various embodiments of the present disclosure.

Correspondingly, according to some embodiments of the present application, the present application further provides a non-transitory computer-readable storage medium on which instructions are stored, and when the instructions are executed by a processor, some or all of the steps in the above method are implemented.

Correspondingly, according to some embodiments of the present application, a computer program product including instructions is provided, and when the instructions are executed by a processor, some or all of the steps in the above method are implemented.

According to some embodiments of the present application, referring to Fig. 3 to Fig. 9, a method for detecting a power of a welding laser light is provided in the present application. The method includes obtaining at least one power sample, wherein the power sample is obtained by sampling, every preset time period, the power of the welding laser light emitted by a laser. The method further includes acquiring a plurality of power samples within a preset power range in the at least one power sample. The method may further include determining a minimum power and a maximum power of a plurality of power samples and averaging the plurality of power samples to obtain an average power. The power detection results may include the minimum power, the maximum power, and the average power. The method may further include sending the minimum power, the maximum power, and the average power as the power detection results, for example, uploading to a recording system.

Finally, it should be noted that, the above embodiments are merely used for describing the technical solutions of the present application, instead of limiting the present application. Although the present application is described in detail with reference to the foregoing embodiments, those having ordinary skill in the art should understand that they can still make modifications on the technical solutions recorded in the above embodiments, or perform equivalent replacements on all or a part of technical features thereof; these modifications or replacements are not intended to make the essences of the corresponding technical solutions depart from the scope of the technical solutions of the embodiments of the present application, and shall fall within the scope of the claims and the specification of the present application. **In** particular, the technical features mentioned in the various embodiments may be combined in any manner as long as there is no structural conflict. The present application is not limited to the specific embodiments disclosed herein, but rather includes all technical solutions falling within the scope of the claims.

## Claims

1. A method for detecting a power of a welding laser light, wherein the method comprises:
obtaining at least one power sample, wherein the power sample is obtained by sampling, every preset time period, the power of the welding laser light emitted by a laser;
acquiring a plurality of power samples within a preset power range in the at least one power sample; and
processing the plurality of power samples within the preset power range to obtain power detection results.

2. The method according to claim 1, wherein processing the plurality of power samples within the preset power range comprises:
determining at least one of a minimum power and a maximum power of the plurality of power samples, wherein the power detection results comprise the at least one of the minimum power and the maximum power.

3. The method according to claim 1 or 2, wherein processing the plurality of power samples within the preset power range comprises:
averaging the plurality of power samples to obtain an average power, wherein the power detection results comprise the average power.

4. The method according to claim 2, wherein processing the plurality of power samples within the preset power range comprises:
averaging the powers in the plurality of power samples other than the at least one of the minimum power and the maximum power to obtain a corrected average power, wherein the power detection results comprise the corrected average power.

5. The method according to any one of claims 1 to 4, wherein the method further comprises:
determining, according to a position welded by the welding laser light, a working condition of welding performed by the laser; and
determining the preset power range according to the working condition of the welding.

6. The method according to claim 5, wherein the method further comprises:
determining a power collection standard value according to the working condition of the welding; and
determining a lower limit value and an upper limit value of the preset power range respectively for the power collection standard value.

7. The method according to any of claims 1 to 6, wherein the method further comprises:
judging whether the quantity of the plurality of power samples within the preset power range meets a data volume requirement; and
sending the power detection results in response to the quantity of the plurality of power samples meeting the data volume requirement.

8. The method according to any of claims 1 to 7, wherein the method further comprises:
judging whether the quantity of the plurality of power samples within the preset power range reaches a data volume upper limit; and
stopping, in response to the quantity of the plurality of power samples reaching the data volume upper limit, sampling the power of the laser light emitted by the laser for welding.

9. The method according to claim 8, wherein the method further comprises:
determining, according to a position welded by the welding laser light, a working condition of welding performed by the laser; and
determining the data volume upper limit according to the working condition of the welding.

10. The method according to claim 8, wherein the method further comprises:
determining the data volume upper limit according to a duration of one laser light emission by the laser and the preset time period.

11. The method according to claim 8, wherein the method further comprises:
determining the data volume upper limit according to a duration of one laser light emission by the laser, a ramp-down time of an output power of the laser, and the preset time period.

12. The method according to claim 8, wherein the method further comprises:
determining the data volume upper limit according to the duration of the power of the laser light within the preset power range and the preset time period.

13. The method according to any one of claims 1 to 12, wherein the method further comprises:
generating, in response to the power sample obtained by sampling the power of the laser light being greater than a power threshold, information indicating that the power of the laser light exceeds the power threshold, wherein the power threshold is greater than or equal to an upper limit value of the preset power range.

14. The method according to any one of claims 1 to 13, wherein the method further comprises:
obtaining, in response to the power samples obtained by sampling the power of the laser light within a threshold time period being all less than a lower limit value of the preset power range, repair welding information instructing the laser to perform repair welding, wherein the threshold time period is determined according to a ramp-up time of the output power of the laser.

15. The method according to claim 14, wherein the method further comprises:
obtaining at least one repair welding power sample, wherein the repair welding power sample is obtained by sampling, every preset time period, the power of the laser light emitted by the laser based on the repair welding information;
acquiring a plurality of repair welding power samples within the preset power range in the at least one repair welding power sample; and
processing the plurality of repair welding power samples within the preset power range to obtain repair welding power detection results.

16. The method according to any one of claims 1 to 13, wherein the method further comprises:
obtaining, in response to the power samples obtained by sampling the power of the laser light within a threshold time period being all less than a lower limit value of the preset power range, information indicating a failure of the welding performed by the laser, wherein the threshold time period is determined according to a ramp-up time of the output power of the laser.

17. A laser welding system, wherein the system comprises:
a laser configured to emit a laser light for welding and comprising a communication interface;
a galvanometer configured to receive the laser light from the laser and manipulate the laser light for welding;
a controller comprising a communication interface and configured to be coupled to the communication interface of the laser by the communication interface via a communication line, so as to receive, from the laser, a power of the laser light emitted by the laser for welding; and
an upper computer configured to be communicatively coupled to the controller and receive power detection results from the controller;
wherein the controller is configured to perform the method according to any one of claims 1 to 16.

18. A laser welding system, wherein the system comprises:
a laser configured to emit a laser light for welding;
a galvanometer configured to receive the laser light from the laser;
a galvanometer control unit configured to control the galvanometer to manipulate the laser light for welding;
a power analog quantity acquisition unit configured to acquire an analog quantity representing a power of the laser light emitted by the laser for welding;
a controller configured to receive, from the power analog quantity acquisition unit through a wire, the analog quantity representing the power of the laser light emitted by the laser for welding, and obtain, according to the analog quantity, the power of the laser light emitted by the laser for welding; and
an upper computer configured to be communicatively coupled to the controller and receive power detection results from the controller;
wherein the controller is configured to perform the method according to any one of claims 1 to 16.

19. A non-transitory computer-readable storage medium, storing instructions, wherein when the instructions are executed by a processor, the method according to any one of claims 1 to 16 is performed.

20. A computer program product, comprising instructions, wherein when the instructions are executed by a processor, the method according to any one of claims 1 to 16 is performed.
